# EUROPÄISCHE PATENTSCHRIFT

(11) **EP 2 793 303 B1**
(45) Veröffentlichungstag und Bekanntmachung des Hinweises auf die Patenterteilung: **09.08.2017**
(21) Anmeldenummer: 13163991.6
(22) Anmeldetag: 16.04.2013
(51) Int. Cl.: H01M 4/66, H01M 4/74, H01M 4/80, H01M 10/0525

(54) **Lithium-Ionen-Zelle mit optimierter Elektrodenkinetik**
Lithium ion cell having optimized electrode kinetics
Cellule au lithium-ion dotée d'une cinétique d'électrodes optimisée

(43) Veröffentlichungstag der Anmeldung: 22.10.2014
(73) Patentinhaber: VARTA Micro Innovation GmbH, 8010 Graz (AT); Dr. Wustinger GmbH, 8010 Graz (AT)
(72) Erfinder: Pötz, Sandra, 8190 Birkfeld (AT); Baumann, Christian, 8480 Mureck (AT); Fuchsbichler, Bernd, 8010 Graz (AT); Kren, Harald, 8042 Graz (AT); Schmuck, Martin, 8010 Graz (DE); Fauler, Gisela, 8010 Graz (AT); Raimann, Dr. Peter, 8010 Graz (AT)
(74) Vertreter: Patentanwaltskanzlei Cartagena

(56) Entgegenhaltungen:
- EP-A1- 2 408 046

## Beschreibung

Die vorliegende Erfindung betrifft eine sekundäre Lithium-lonen-Zelle.

Der Begriff "Batterie" meinte ursprünglich mehrere in Serie geschaltete galvanische Zellen in einem Gehäuse. Heute werden jedoch auch einzelne galvanische Zellen häufig als Batterie bezeichnet. Bei der Entladung einer Batterie findet eine energieliefernde chemische Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden Ionenstrom innerhalb der Zelle. Dieser Ionenstrom wird durch einen ionisch leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren. Werden in diesem Zusammenhang die Begriffe Anode und Kathode benutzt, benennt man die Elektroden in der Regel entsprechend ihrer Entladefunktion. Die negative Elektrode ist in solchen Zellen also die Anode, die positive Elektrode die Kathode.

Die einer Zelle entnehmbare Ladung, die in starkem Maß von den Entladebedingungen abhängt, wird als Kapazität (Einheit Ah) bezeichnet. Die spezifische Ladung (Einheit Ah/kg) bzw. Ladungsdichte (Einheit Ah/L) ist ein Maß für die Anzahl an freigesetzten bzw. aufgenommenen Elektronen und/oder Ionen pro Masse- bzw. Volumeneinheit und damit für die Speicherfähigkeit von Elektroden und Batterien. Entsprechend spricht man in diesem Zusammenhang auch von der spezifischen Kapazität von Elektroden und Batterien, die ebenfalls in der Einheit Ah/kg angegeben wird. Ein großer Potentialunterschied zwischen negativer und positiver Elektrode resultiert in Kombination mit Elektrodenmaterialien hoher spezifischer Ladung bzw. Ladungsdichte in hohen Werten für die spezifische Energie (Einheit Wh/kg) bzw. die Energiedichte (Einheit Wh/L). Beim Betrieb einer Batterie sind die Geschwindigkeiten des Elektronen- und des Ionentransfers innerhalb der Batterie, insbesondere die Geschwindigkeit des Ionentransfers an Phasengrenzflächen innerhalb der Elektroden, leistungslimitierend. Die diesbezüglichen Eigenschaften von Batterien lassen sich an den Kennzahlen spezifische Leistung (Einheit W/kg) und Leistungsdichte (Einheit W/L) ablesen.

Unter den sekundären Zellen und Batterien werden vergleichsweise hohe Energiedichten von Lithium-Ionen-Batterien erreicht, also von Batterien, bei denen im Rahmen der erwähnten Lade- und Entladevorgänge Lithium-lonen in Elektroden ein- oder auslagert werden. Diese Batterien weisen in der Regel sogenannte Kompositelektroden auf, die neben elektrochemisch aktiven Komponenten auch elektrochemisch inaktive Komponenten umfassen. Als elektrochemisch aktive Komponenten (oft auch als Aktivmaterialien bezeichnet) für Lithium-lonen-Batterien kommen grundsätzlich sämtliche Materialien in Frage, die Lithium-lonen aufnehmen und wieder abgeben können. Stand der Technik sind diesbezüglich für die negative Elektrode insbesondere Partikel auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien zum Einsatz kommen, die mit Lithium legierbar sind. So sind beispielsweise die Elemente Zinn, Antimon und Silizium in der Lage, mit Lithium intermetallische Phasen zu bilden. Für die positive Elektrode umfassen die zu diesem Zeitpunkt industriell verwendeten Aktivmaterialien vor allem Lithiumcobaltoxid (LiCoO₂), LiMn₂O₄-Spinell (LiMn₂O₄), Lithiumeisenphosphat (LiFePO₄) sowie Derivate wie beispielsweise LiNi_{1/3}Mn_{1/3}Co_{1/3}O₂ oder LiMnPO₄. Sämtliche elektrochemisch aktiven Materialien sind in der Regel in Partikelform in den Elektroden enthalten.

Als elektrochemisch inaktive Komponenten sind an erster Stelle Elektrodenbinder und Stromsammler zu nennen. Über Stromsammler werden Elektronen aus den Elektroden zu- oder abgeführt, sie sind also für die elektrische Kontaktierung der Elektroden verantwortlich. Elektrodenbinder sorgen für die mechanische Stabilität der Elektroden sowie für die Kontaktierung der Partikel aus elektrochemisch aktivem Material untereinander und zum Stromsammler. Zu einer verbesserten elektrischen Anbindung der elektrochemisch aktiven Partikel an den Stromsammler können leitfähigkeitsverbessernde Additive beitragen, die ebenfalls unter den Sammelbegriff "elektrochemisch inaktive Komponenten" zu subsumieren sind. Sämtliche elektrochemisch inaktiven Komponenten sollten zumindest im Potentialbereich der jeweiligen Elektrode elektrochemisch stabil sein und einen chemisch inerten Charakter gegenüber gängigen Elektrolytlösungen aufweisen. Gängige Elektrolytlösungen sind z.B. Lösungen von Lithiumsalzen wie Lithiumhexafluorophosphat in organischen Lösungsmitteln wie Ether und Ester der Kohlensäure.

Aktuell werden in Elektroden von Lithium-Ionen-Batterien als Stromsammler meist Folien aus Kupfer (auf Seiten der negativen Elektrode) und Folien oder Streckmetallgitter aus Aluminium (auf Seiten der positiven Elektrode) eingesetzt. Insbesondere die Folien weisen jedoch eine relativ geringe Kontaktfläche zu den elektrochemischen Aktivmaterialien auf, da sie - abgesehen von einer gewissen Rauigkeit ihrer Oberflächen - im Grunde lediglich eine 2-dimensionale Kontaktfläche zu den restlichen Elektrodenkomponenten bieten. Dies kann ursächlich für eine schlechte Elektrodenkinetik und Ratenfähigkeit solcher Elektroden sein.

Um diesen Nachteilen entgegenzuwirken, wurden dreidimensionale Stromsammler in Form von metallisierten Schäumen, Geweben oder Vliesen, wie sie in der EP 1 299 916 B1 beschrieben sind, entwickelt. Diese weisen in der Regel deutlich deutlich größere Kontaktflächen als die erwähnten Stromsammlerfolien auf. Durch deren Einsatz konnte die elektrische Anbindung der Aktivmaterialien deutlich verbessert werden.

Ein weiterer Vorteil von dreidimensionalen Stromsammlern besteht in der mechanischen Stabilisierung damit versehener Elektroden. Dies spielt besonders bei der Verwendung von Aktivmaterialien mit hoher Aufnahmefähigkeit für Lithium eine Rolle: Jede Lithium-Aufnahme bzw. Abgabe geht mit Änderungen des Volumens der beteiligten Aktivmaterialpartikel einher. Diese fortwährende mechanische Belastung führt zu Degenerationserscheinungen, welche sich in einer Abnahme der Zellkapazität äußern. Der stabilisierende Effekt eines dreidimensionalen Stromsammlers ist in der DE 10 2010 008 782 A1 beschrieben.

Aus der EP 2 408 046 A1 ist ein dreidimensionaler Stromsammler für Lithium-lonen-Batterien in form eines Vlieses, das aus metallbeschichteten Fäden besteht, bekannt. Zur Herstellung des Vlieses können Polyesterfasern mit einem Durchmesser von 10 µm mit Kupfer beschichtet werden. Der dabei erhaltene Stromsammler weist eine spezifische Dichte von 0,24 auf.

Der vorliegenden Erfindung lag die Aufgabe zugrunde, weiter verbesserte Lithium-lonen-Batterien bereitzustellen.

Diese Aufgabe wird gelöst durch die Lithium-lonen-Zelle mit den Merkmalen des Anspruchs 1. Bevorzugte Ausführungsformen der erfindungsgemäßen galvanischen Zelle sind in den abhängigen Ansprüchen 2 bis 12 angegeben. Der Wortlaut sämtlicher Ansprüche wird hiermit durch Bezugnahme zum Inhalt dieser Beschreibung gemacht.

Gegenstand der vorliegenden Erfindung ist eine Lithium-lonen-Zelle, die mindestens eine positive Elektrode, mindestens eine negative Elektrode und mindestens einen Separator umfasst. Letzterer muss für Lithium-Ionen permeabel sein, die beim Laden und Entladen der Zelle zwischen der mindestens einen positiven und der mindestens einen negativen Elektrode hin- und herwandern.

Bei der erfindungsgemäßen Zelle handelt es sich bevorzugt um eine sekundäre Zelle, also um eine wiederaufladbare Zelle, wie sie eingangs erwähnt wurde.

Die erfindungsgemäße Zelle zeichnet sich dadurch aus, dass entweder die mindestens eine positive oder die mindestens eine negative Elektrode, gegebenfalls auch sowohl die mindestens eine positive als auch die mindestens eine negative Elektrode, ein textiles Flächengebildeals Stromsammler aufweist bzw. aufweisen.

Der Terminus textiles Flächengebilde meint vorliegend grundsätzlich alle Flächengebilde aus Fasern wie beispielsweise Filze und Watten. Besonders bevorzugt handelt es sich bei dem textilen Flächengebilde jedoch um ein Vlies.

Die Verwendung des textilen Flächengebildes als Stromsammler gewährleistet eine gute Kontaktierung des Kompositmaterials. Im Vergleich zu den oben erwähnten Stromsammlerfolien bieten textile Flächengebilde eine größere Ober- und damit Kontaktfläche, was in einer verbesserten Anbindung des Kompositmaterials an den Stromsammler resultiert. Die erfindungsgemäße Zelle weist bereits deshalb eine sehr gute Zyklisierbarkeit und Ratenfähigkeit auf. Zudem werden höhere Massebeladungen der Elektroden ermöglicht, was sich in einer höheren Energiedichte der Zelle wiederspiegelt.

Besonders zeichnet sich die erfindungsgemäße Zelle dadurch aus, dass das Flächengebilde eine mittlere Filamentdichte von weniger als 10 mg/mm³, besonders bevorzugt von weniger als 1 mg/mm³, aufweist und in gleich große Volumeneinheiten mit einem Mindestvolumen von 1 mm³ unterteilbar ist, deren Dichte um maximal 7,5 % von der mittleren Filamentdichte des Flächengebildes abweicht. Mit anderen Worten, ein erfindungsgemäß als Stromsammler verwendetes Flächengebilde zeichnen sich durch eine besonders hohe Homogenität aus. Teilt man den Stromsammler in bezüglich des Volumens gleich große Teile, so weisen diese bevorzugt eine identische Dichte auf. Sofern es eine Abweichung gibt, so liegt diese stets innerhalb der genannten Grenzen.

Bevorzugt beträgt die mittlere Filamentdichte des Flächengebildes weniger als 5 mg/mm³, besonders bevorzugt weniger als 2,5 mg/mm³, insbesondere weniger als 1 mg/mm³.

Die maximale Abweichung der Dichte von der mittleren Filamentdichte des Flächengebildes beträgt bevorzugt maximal 5 %, besonders bevorzugt maximal 2,5 %.

Dem Faktor Homogenität wurde im Stand der Technik keine Beachtung geschenkt, obwohl ihm doch eine signifikante Bedeutung zukommt. Es ist sehr wichtig, dass die Stromsammler von Lithium-lonen-Zellen möglichst konstant mit Aktivmaterialmasse beladen sind und dass umgekehrt der Stromsammler möglichst gleichmäßig in den Elektroden von Lithium-Ionen-Zellen verteilt ist. Wird dieser Aspekt nicht beachtet, kann es gegen Ende des Ladezyklus der Zellen an der negativen Elektrode in Bereichen mit geringer Aktivmassenbeladung lokal zur Überladung mit Lithium kommen, während andere Bereiche der Elektrode noch zur Aufnahme von Lithium befähigt sind. Der Ladungsausgleich zwischen solchen überladenen Mikrobezirken und zur Aufnahme von Lithium noch befähigten Bereichen geht nur sehr langsam von statten. Dadurch wird die lokale Abscheidung von metallischem dendritischem Lithium begünstigt, was bei Durchwachsen des Dendriten durch den Separator zu einem internen Kurzschluss führen kann und gegebenenfalls ein massives Sicherheitsproblem darstellt.

Sämtliche aus dem Stand der Technik bekannte als Stromsammler verwendete Vliese zeichnen sich durch einen hohen Grad an Inhomogenität aus. Dies ist vor allem auf Faseragglomerationen und Faserdefekte zurückzuführen, welche bei erfindungsgemäß verwendeten textilen Flächengebilden nicht oder nur in veringertem Umfang auftreten. Durch die hohe Homogenität des erfindungsgemäß verwendeten textilen Flächengebildes werden die beschriebenen Probleme eliminiert oder zumindest stark reduziert. Dadurch wird die ansonsten bestehende Notwendigkeit einer (bezogen auf die Aktivmassenbeladung) überdimensionierten negativen Elektrode vermieden oder deutlich reduziert. Eine kapazitive Überdimensionierung der negativen Elektrode gegenüber der positiven Elektrode senkt die Gesamtenergiedichte einer Zelle.

Zur Klarstellung, die genannten Werte für die mittlere Filamentdichte beziehen sich natürlich auf ein Flächengebilde frei von Aktivmaterial. Ihre Bestimmung erfolgte, bevor die Flächengebilde mit Aktivmaterialmasse beladen wurden.

Es ist bevorzugt, dass das Flächengebilde aus Filamenten mit einem Durchmesser zwischen 1 µm und 25 µm, insbesondere zwischen 1 µm und 10 µm, besteht. Überschreitet oder unterschreitet der Filamentdurchmesser die angegebenen Werte, so kann sich dies unter Umständen zu Lasten der Homogenität des Flächengebildes auswirken.

Die Filamente weisen bevorzugt einen Kern aus einem nicht-metallischen Material und eine Hülle aus einem Metall, insbesondere ausgewählt aus der Gruppe mit Nickel, Kupfer, Aluminium und einer Legierung dieser Metalle, auf. Bei dem nichtmetallischen Material handelt es sich bevorzugt um polymere Fasern, beispielsweise aus Polyester, Polyamid, Polycarbonat, Polyethylenimin, Polyethylen, Polypropylen, Aramid, Polyvinylidenfluorid, Polytetrafluorethylen oder anderen fluorierten oder perfluorierten Polymeren. Alternativ können auch anorganische Fasern wie Glasfasern, Kohlenstofffasern, Keramikfasern, Nanotubefasern oder Basaltfasern oder Naturfasern (Samenfasern, Bastfasern, Blattfasern, Fruchtfasern, Polysaccharidfasern) zum Einsatz kommen.

Die Verwendung eines Kerns aus einem nicht-metallischen Material ermöglicht den Verzicht auf massive Metallstromsammler, gegenüber denen die erfindungsgemäß bevorzugten einen großen Gewichtsvorteil besitzen. Sowohl auf Seiten der Anode als auch auf Seiten der Kathode verbessert sich somit die spezifische Kapazität.

Die metallische Hülle weist bevorzugt eine Dicke zwischen 0,05 µm und 10 µm auf. Innerhalb dieses Bereiches ist eine Dicke zwischen 0,5 µm und 5 µm, bevorzugt zwischen 0,5 µm und 3 µm, weiter bevorzugt.

Je größer die Oberfläche ist, die der Stromsammler zwecks Beladung mit Aktivmaterialmasse zur Verfügung stellt, desto besser ist die zu erwartende Elektrodenkinetik. Es ist deshalb bevorzugt, dass das textile Flächengebilde eine spezifische BET-Oberfläche von 0,1 m²/g bis 20 m²/g, bevorzugt zwischen 0,1 m²/g und 10 m²/g, besonders bevorzugt zwischen 0,1 m²/g und 3 m²/g, aufweist.

Je mehr Volumen des Stromsammlers mit Aktivmasse befüllt werden kann, desto höher ist die Energiedichte der jeweiligen Elektrode einer erfindungsgemäßen Zelle. Wesentlich hierfür ist ein Stromsammler, welcher makroskopisch wie mikroskopisch möglichst homogen ist und eine Porosität besitzt, welche es erlaubt, einen signifikanten Teil des Stromsammlervolumens mit Aktivmassekomposit zu füllen. Es ist deshalb bevorzugt, dass das textile Flächengebilde eine Porosität (das Verhältnis von Hohlraumvolumen zu Gesamtvolumen des Flächengebildes) zwischen 20 % und 90 %, bevorzugt zwischen 50 % und 90 % aufweist.

Unter Wahrung einer möglichst hohen Homogenität und Festigkeit des Stromsammlers bei gleichzeitiger zumindest teilweiser Befüllung des porösen Stromsammlers mit Aktivmaterial hat sich ein Quotient aus mittleren Filamentdurchmesser des metallisierten Vlieses in µm und der Porosität (freies Volumen bezogen auf die geometrischen Abmessungen) des verwendeten Stromsammlers in % von < 1 als besonders vorteilhaft herausgestellt.

In besonders bevorzugten Ausführungsformen ist es bevorzugt, dass die negative Elektrode ein textiles Flächengebilde mit einer mittleren Filamentdichte zwischen 0,25 mg/mm³ und 2,5 mg/mm³, bevorzugt zwischen 0,25 mg/mm³ und 0,75 mg/mm³, aufweist.

Bevorzugt enthält die negative Elektrode als Aktivmaterial eine Kohlenstoffverbindung, welche Lithium in Form von Ionen reversibel ein- und auszulagern vermag, und/oder ein Metall und/oder Halbmetall, welches mit Lithium eine intermetallische Phase zu bilden vermag. Auf die eingangs erwähnten aus dem Stand der Technik bekannten geeigneten Aktivmaterialien wird hiermit verwiesen.

Weiterhin ist es bevorzugt, wenn die negative Elektrode als Stromsammler ein textiles Flächengebilde aus Filamenten mit einer Hülle aus Kupfer, Nickel oder einer Kombination, insbesondere Legierung der beiden Metalle, aufweist, wobei die Hülle durch Abscheidung aus einer metal- oder metallionenhaltigen Suspension oder Lösung gebildet wurde. Die Abscheidung kann beispielsweise stromlos oder galvanisch erfolgen.

In einer weiteren besonders bevorzugten Ausführungsformen weist die positive Elektrode ein textiles Flächengebilde mit einer mittleren Filamentdichte zwischen 0,15 mg/mm³ und 1,5 mg/mm³, bevorzugt zwischen 0,15 mg/mm³ und 0,65 mg/mm³, auf.

Bevorzugt enthält die positive Elektrode als Aktivmaterial eine Metallverbindung, welche Lithium in Form von Ionen reversibel ein- und auszulagern vermag. Beispiele geeigneter Aktivmaterialien sind Olivinmaterialien wie z.B. LiFePO₄), geschichtete und gemischt geschichtete Materialien wie LiCoO₂ und LiNi_{1/3}Mn_{1/3}Co_{1/3}O₂, Spinellmaterialien wie z.B. LiMn₂O₄ sowie Schwefel. Im Übrigen wird auch hier auf die eingangs erwähnten aus dem Stand der Technik bekannten geeigneten Aktivmaterialien verwiesen.

Weiterhin ist es bevorzugt, wenn die positive Elektrode als Stromsammler ein textiles Flächengebilde aus Filamenten mit einer Hülle aus Aluminium, Nickel oder einer Kombination, insbesondere Legierung der beiden Metalle, aufweist, wobei die Hülle durch Abscheidung aus der Gasphase gebildet wurde.

Neben den genannten Komponenten umfassen die Elektroden einer erfindungsgemäßen Zelle in der Regel zumindest noch einen Elektrodenbinder, ein Leitfähigkeitsadditiv, gegebenenfalls noch weitere Additive (z.B. Weichmacher) sowie einen Elektrolyten. Geeignete Binder und Additive sind dem Fachmann bekannt. Ein besonders bevorzugter Binder auf Basis von Carboxymethylzellulose ist in der WO 2009/012899 beschrieben. Der Inhalt dieser Anmeldung wird durch Bezugnahme zum Inhalt der vorliegenden Beschreibung gemacht. Bei dem Elektrolyten handelt es sich bevorzugt um eine Lösung eines geeigneten Leitsalzes wie Lithiumhexafluorophosphat. Als Lösungsmittel kommt bevorzugt ein organisches Lösungsmittel zum Einsatz, insbesondere ein Ether oder eine Esterverbindung der Kohlensäure

Als Separator für die erfindungsgemäße Zelle eignen sich beispielsweise handelsübliche Polyolefin- oder Polyetherketonseparatoren.

Die Kapazität der mindestens einen negativen Elektrode zur Aufnahme von Lithium ist lediglich um den Faktor 1,01 bis 1,3 (diese Werte gelten insbesondere für Hochenergiesysteme) größer als die der mindestens einen positiven Elektrode. Dies wird ermöglicht durch die hohe Homogenität des erfindungsgemäß verwendeten textilen Flächengebildes, wie es bereits beschrieben wurde.

Auch jede Batterie, die mindestens eine erfindungsgemäße galvanische Zelle umfasst, wie sie oben beschrieben wurde, ist Gegenstand der vorliegenden Erfindung. Eine erfindungsgemäße Zelle kann beispielsweise in Form eines Verbundes aus flachen Elektroden und einem mit Elektrolyt getränkten Separator vorliegen. In einer erfindungsgemäßen Batterie liegt ein solcher Verbund bevorzugt in stapelartiger Anordung oder in gewickelter Form vor.

Weiterhin ist auch ein Verfahren zur Herstellung von Elektroden von Lithium-lonen-Zellen Gegenstand der vorliegenden Erfindung. Gekennzeichnet ist dieses durch die Verwendung eines Stromsammlers der beschriebenen Art. Dieser wird mit Aktivmaterial beladen, beispielsweise in einem Beschichtungsprozess oder insbesondere auch im Rahmen eines Verfahrens, wie es in der WO 2012/110403 A1 beschrieben ist. Zum Einsatz kommt hierbei üblicherweise eine Paste oder eine Suspension, die neben elektrochemischem Aktivmaterial zumindest noch einen Binder, ein Leitfähigkeitsadditiv, einen Weichmacher und ein Suspensionsmittel aufweist.

In der Suspension oder Paste enthaltenes Suspensionsmittel wird nach dem Beladen entfernt, die so erhaltene Elektrode kann auf übliche Art weiterverarbeitet werden.

Weitere Merkmale der Erfindung ergeben sich auch aus der nun folgenden Beschreibung der Zeichnungen sowie bevorzugter Ausführungsformen in Verbindung mit den Unteransprüchen. Hierbei können einzelne Merkmale jeweils für sich oder zu mehreren in Kombination miteinander einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Beispiele

### (1) Dreidimensionaler Vlies-Stromsammler für die negative Elektrode einer Lithium-Ionen-Zelle

Auf ein 0,1 mm dickes Polyolefin-Rohvlies aus Filamenten mit einer Dicke von ca. 10 µm wurde mittels außenstromloser Abscheidung eine Kupferschicht aufgebracht. Eine Untersuchung mittels Rasterelektronenmikroskopie ergab, dass das abgeschiedene Kupfer eine dünne Hülle auf den einzelnen Filamenten des Vlieses bildete. Die Dicke der Hüllschicht betrug im Mittel ca. 0,5 µm.

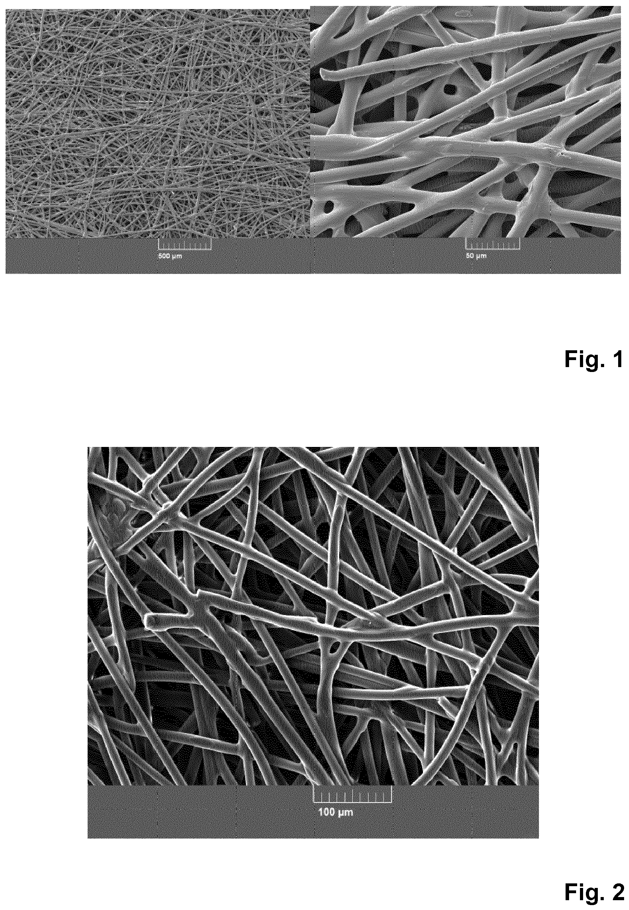

Bei Fig. 1 handelt es sich um eine REM-Aufnahme des metallisierten Vlieses (Vergrößerung linka 100-fach, rechts 1000-fach). Die aufgerauhte Struktur ermöglicht eine gute Anbindung an Elektrodenaktivmaterialpartikel.

Durch Ausstanzen von 100 exakt gleich großen Bereichen aus dem Vlies und anschließendes Wägen sowie Mittelwertbildung wurde die mittlere Filamentdichte des Vlieses bestimmt. Sie betrug 0,502 mg / mm³ ± 0,012 mg / mm³ (Standardabweichung).

Zum Vergleich wurde ein aus dem Stand der Technik bekanntes Vlies (Polymet®XII-1 Cu) auf die gleiche Weise untersucht. Die mittlere Filamentdichte lag hier bei 0,991 ± 0,088. Das Vlies wies somit ein nahezu um den Faktor 2 höheres Gewicht auf als das zuerst untersuchte. Darüber hinaus wies es bezüglich seiner Dichte große Inhomogenitäten auf, was durch die hohe Abweichung von ca. 8,9 % zum Ausdruck kommt. Im Falle des metallisierten Vlieses betrug die Abweichung nur ca. 2,4 %.

### (2) BET-Messungen

Vom Polyolefin-Rohvlies und dem gemäß (1) mit Kupfer metallisierten Polyolefinvlies wurde die BET-Oberfläche bestimmt. Probenstücke mit einer Masse von ca. 0,3 g wurden jeweils zu einer Rolle mit 6 cm Länge und einem Durchmesser von etwa 9 mm aufgerollt, für 4 Stunden bei 90 °C unter Vakuum vorbereitet und anschließend an einem QUANTACHROME AUTOSORB-3 (Firma Quantachrome Instruments, Boynton Beach, Florida, USA) mit Krypton bei 77K nach DIN ISO 9277 vermessen.

Für das Polyolefin-Rohvlies wurde eine BET-Oberfläche von 0,2 m²/g bestimmt, für das metallisierte Vlies eine BET-Oberfläche von 0,27 m²/g.

### (3) Dreidimensionaler Vlies-Stromsammler für die positive Elektrode einer Lithium-lonen-Zelle

Auf ein 0,1 mm dickes Polyolefin-Rohvlies aus Filamenten mit einer Dicke von 10 µm wurde mittels PVD (physical vapour deposition) eine Aluminiumschicht aufgebracht. Eine Untersuchung mittels Rasterelektronenmikroskopie ergab, dass das abgeschiedene Alumnium eine dünne Hülle auf den einzelnen Filamenten des Vlieses bildete. Die Dicke der Hüllschicht betrug 1 µm.

Bei Fig. 2 handelt es sich um eine REM-Aufnahme des metallisierten Vlieses (Vergrößerung 500-fach. Auch hier ist leicht zu erkennen, dass die aufgerauhte Struktur eine gute Anbindung an Elektrodenaktivmaterialpartikel ermöglicht.

Durch Ausstanzen von 100 exakt gleich großen Bereichen aus dem Vlies und anschließendes Wägen sowie Mittelwertbildung wurde die mittlere Filamentdichte des Vlieses bestimmt. Sie betrug 0,331 mg / mm³ ± 0,008 mg / mm³ (Standardabweichung).

### (4) BET-Messungen

Vom Polyolefin-Rohvlies und dem gemäß (3) mit Aluminium metallisierten Polyolefinvlies wurde die BET-Oberfläche bestimmt. Probenstücke mit einer Masse von ca. 0,3 g wurden jeweils zu einer Rolle mit 6 cm Länge und einem Durchmesser von etwa 9 mm aufgerollt, für 4 Stunden bei 90°C unter Vakuum vorbereitet und anschließend an einem QUANTACHROME AUTOSORB-3 (Firma Quantachrome Instruments, Boynton Beach, Florida, USA) mit Krypton bei 77K nach DIN ISO 9277 vermessen.

Für das Polyolefin-Rohvlies wurde eine BET-Oberfläche von 0,2 m²/g bestimmt, für das metallisierte Vlies eine BET-Oberfläche von 0,31 m²/g.

### (5) Elektrochemische Charakterisierung

Gemäß (3) hergestellte dreidimensionale Vlies-Stromsammler sowie zum Vergleich eine 30 µm dicke Aluminiumfolie wurden in einem Coatingprozess mit einer Suspension enthaltend ein in N-Methylpyrollidon suspendiertes Elektrodenaktivmaterial (Lösungsmittel / Feststoffgehalt beschichtet. An Feststoffen enthielt die Suspension 7 Gew.-% Polyvinylidenfluorid als Binder, 88 Gew.-% LiCoO₂ als Aktivmaterial und 5 Gew.-% Leitruß als Leitfähigkeitsverbesserer. Nach dem Beschichtungsprozess wurden die hergestellten Elektroden getrocknet, in Testzellen verbaut und elektrochemisch charakterisiert.

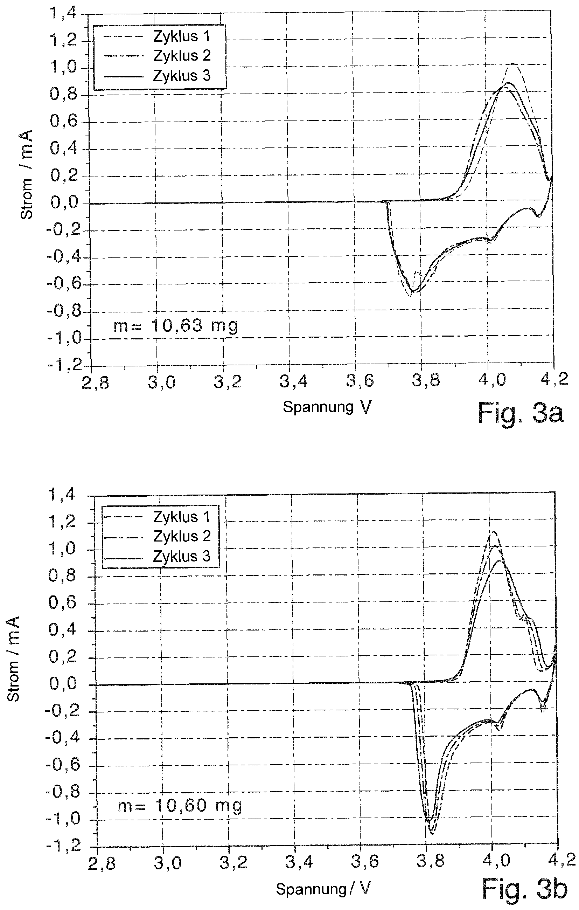

Zyklovoltammetrie: Die Ergebnisse der zyklovoltammetrischen Untersuchungen sind in Fig. 3a und Fig. 3b dargestellt (unten die Ergebnisse für die Elektroden mit dem dreidimensionalen Vlies-Stromsammler, oben die Elektroden mit der Aluminiumfolie). Bei einer Scanrate von 30 µV/s zeigte bei Verwendung des dreidimensionalen Stromsammlers eine deutlich verbesserte Kinetik. Dies spiegelt sich in den definierten, scharfen Peaks des dazugehörigen Zyklovoltagramms wieder. Im Gegenzug sind bei Verwendung der Aluminiumfolie als Stromsammler Peakverbreiterungen sowohl bei der Lithierung als auch bei der Delithierung erkennbar. Dies sowie die Überlagerung der einzelnen Lithiumauslagerungspeaks weist auf eine schlechte Gesamtkinetik der Elektrode hin.

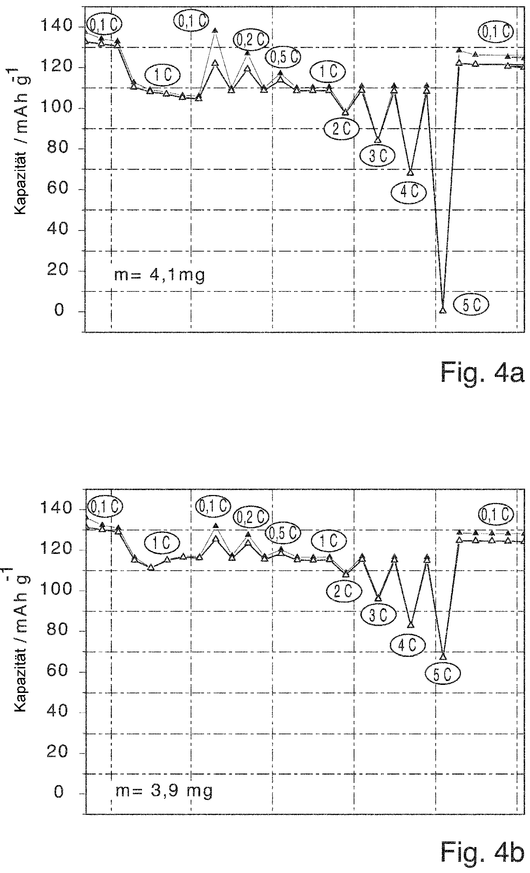

Ratentests: Zur Überprüfung der Elektrodenkinetik wurden Lade/Entladeratentests durchgeführt. Die Ergebnisse der Tests sind in Fig. 4a und Fig. 4b dargestellt (unten die Ergebnisse für die Elektroden mit dem dreidimensionalen Vlies-Stromsammler, oben die Elektroden mit der Aluminiumfolie). Der Vergleich der Lade/Entladeratentests verdeutlichen die Ergebnisse der zyklovoltammetrischen Experimente. Die Elektrode, die den dreidimensionalen Stromsammler verwendet, weißt eine deutlich bessere Ratenfähigkeit als der Elektrode mit der Aluminiumfolie als Stromsammler auf.

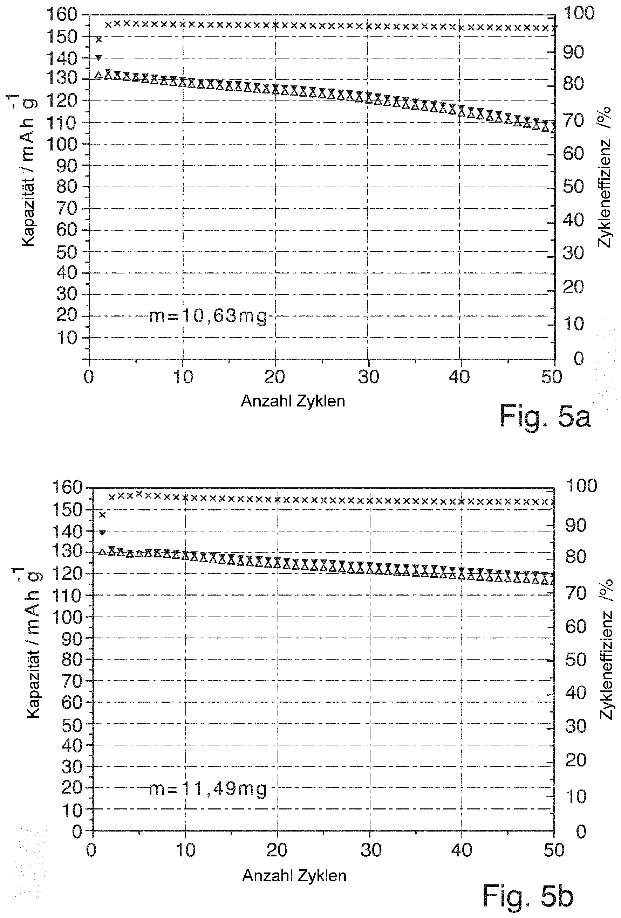

Zyklisierungen: Die Ergebnisse der Zyklisierungstests sind in Fig. 5a und 5b dargestellt (unten die Ergebnisse für die Elektroden mit dem dreidimensionalen Vlies-Stromsammler, oben die Elektroden mit der Aluminiumfolie). Bei Verwendung der Aluminiumfolie als Stromsammler ist ein Kapazitätsabfall zu beobachten, der bei Verwendung des dreidimensionalen Stromableiters nicht zu beobachten ist. Nach 50 Zyklen weist die Elektrode mit Aluminiumfolie nur mehr eine reversible Kapazität von 106 mAh/g auf, wohingegen die Elektrode mit dem dreidimensionalen Stromableiter noch 115 mAh/g aufweist.

## Patentansprüche

1. Lithium-lonen-Zelle, umfassend eine positive Elektrode, eine negative Elektrode und einen Separator, der für Lithiumionen permeabel ist, welche beim Laden und Entladen der Zelle zwischen der positiven und der negativen Elektrode hin- und herwandern, **dadurch gekennzeichnet, dass** die positive und/oder die negative Elektrode ein textiles Flächengebilde als Stromsammler aufweist, wobei das Flächengebilde eine mittlere Filamentdichte von weniger als 10 mg/mm³ aufweist und in gleich große Volumeneinheiten mit einem Mindestvolumen von 1 mm³ unterteilbar ist, deren Dichte um maximal 7,5 % von der mittleren Filamentdichte des Flächengebildes abweicht und dadurch charakterisiert, dass die Kapazität der mindestens einen negativen Elektrode zur Aufnahme von Lithium lediglich um den Faktor 1,01 bis 1,3 größer ist als die der mindestens einen positiven Elektrode.

2. Zelle nach Anspruch 1, **dadurch gekennzeichnet, dass** das Flächengebilde aus Filamenten mit einem Durchmesser zwischen 1 µm und 25 µm besteht.

3. Zelle nach einem der Ansprüche 1 oder 2, **dadurch gekennzeichnet, dass** die Filamente einen Kern aus einem nicht-metallischen Material und eine Hülle aus einem Metall aufweisen.

4. Zelle nach Anspruch 3, **dadurch gekennzeichnet, dass** die metallische Hülle eine Dicke zwischen 0,1 µm und 10 µm aufweist.

5. Zelle nach einem der vorhergehenden Ansprüche, **dadurch gekennzeichnet, dass** das textile Flächengebilde eine spezifische BET-Oberfläche von 0,1 bis 20 m²/g aufweist.

6. Zelle nach einem der vorhergehenden Ansprüche, **dadurch gekennzeichnet, dass** das textile Flächengebilde eine Porosität zwischen 20 % und 90 % aufweist.

7. Zelle nach einem der vorhergehenden Ansprüche, **dadurch gekennzeichnet, dass** die negative Elektrode ein textiles Flächengebilde mit einer mittleren Filamentdichte zwischen 0,25 mg/mm³ und 2,5 mg/mm³ aufweist.

8. Zelle nach Anspruch 7, **dadurch gekennzeichnet, dass** die negative Elektrode eine Kohlenstoffverbindung, welche Lithium in Form von Ionen reversibel ein- und auszulagern vermag, und/oder ein Metall und/oder Halbmetall, welches mit Lithium eine intermetallische Phase zu bilden vermag, enthält.

9. Zelle nach Anspruch 7 oder 8, **dadurch gekennzeichnet, dass** das textile Flächengebilde aus Filamenten mit einer Hülle aus Kupfer besteht, welche Abscheidung aus einer metal- oder metallionenhaltigen Suspension oder Lösung gebildet wurde.

10. Zelle nach einem der vorhergehenden Ansprüche, **dadurch gekennzeichnet, dass** die positive Elektrode ein textiles Flächengebilde mit einer mittleren Filamentdichte zwischen 0,15 mg/mm³ und 1,5 mg/mm³ aufweist.

11. Zelle nach Anspruch 10, **dadurch gekennzeichnet, dass** die positive Elektrode eine Metallverbindung enthält, welche Lithium in Form von Ionen reversibel ein- und auszulagern vermag.

12. Zelle nach Anspruch 9 oder 10, **dadurch gekennzeichnet, dass** das textile Flächengebilde aus Filamenten mit einer Hülle aus Aluminium besteht, welche durch Abscheidung aus der Gasphase gebildet wurde.

## Claims

1. Lithium ion cell comprising a positive electrode, a negative electrode and a separator which is permeable to lithium ions which migrate back and forth between the positive electrode and the negative electrode during charging and discharging of the cell, **characterized in that** the positive electrode and/or the negative electrode has a sheet-like textile structure as current collector, where the sheet-like structure has an average filament density of less than 10 mg/mm³ and can be divided into equal-sized volume units which have a minimum volume of 1 mm³ and whose density deviates by not more than 7.5% from the average filament density of the sheet-like structure, and **characterized in that** the capacity of the at least one negative electrode for the uptake of lithium is only a factor of from 1.01 to 1.3 greater than that of the at least one positive electrode.

2. Cell according to Claim 1, **characterized in that** the sheet-like structure consists of filaments having a diameter in the range from 1 µm to 25 µm.

3. Cell according to either Claim 1 or 2, **characterized in that** the filaments have a core composed of a nonmetallic material and a sheath composed of a metal.

4. Cell according to Claim 3, **characterized in that** the metallic sheath has a thickness in the range from 0.1 µm to 10 µm.

5. Cell according to any of the preceding claims, **characterized in that** the sheet-like textile structure has a specific BET surface area of from 0.1 to 20 m²/g.

6. Cell according to any of the preceding claims, **characterized in that** the sheet-like textile structure has a porosity in the range from 20% to 90%.

7. The cell according to any of the preceding claims, **characterized in that** the negative electrode comprises a sheet-like textile structure having an average filament density in the range from 0.25 mg/mm³ to 2.5 mg/mm³.

8. Cell according to Claim 7, **characterized in that** the negative electrode contains a carbon compound which is able to reversibly incorporate and release lithium in the form of ions and/or contains a metal and/or semimetal which is able to form an intermetallic phase with lithium.

9. Cell according to Claim 7 or 8, **characterized in that** the sheet-like cell structure consists of filaments having a sheath composed of copper formed by deposition from a suspension or solution containing metal or metal ions.

10. Cell according to any of the preceding claims, **characterized in that** the positive electrode comprises a sheet-like textile structure having an average filament density in the range from 0.15 mg/mm³ to 1.5 mg/mm³.

11. Cell according to Claim 10, **characterized in that** the positive electrode contains a metal compound which is able to reversibly incorporate and release lithium in the form of ions.

12. Cell according to Claim 9 or 10, **characterized in that** the sheet-like textile structure consists of filaments having a sheath composed of aluminium which has been formed by deposition from the gas phase.

## Revendications

1. Cellule au lithium-ion, comprenant une électrode positive, une électrode négative et un séparateur qui est perméable aux ions de lithium, lesquels vont et viennent entre l'électrode positive et l'électrode négative lors de la charge et de la décharge de la cellule, **caractérisée en ce que** l'électrode positive et/ou l'électrode négative présentent une structure textile plane qui est conçue sous la forme d'un collecteur de courant, selon laquelle la structure plane présente une densité moyenne de filaments inférieure à 10 mg/mm³ et est divisible dans des unités de volume de taille identique avec un volume minimal de 1 mm³, dont la densité diverge au plus de 7,5 % par rapport à la densité moyenne de filaments de la structure plane ; et
**caractérisée en ce que** la capacité de l'au moins une électrode négative destinée à la réception du lithium n'est supérieure que d'un facteur compris entre 1,01 et 1,3 par rapport à la capacité de l'au moins une électrode positive.

2. Cellule selon la revendication 1, **caractérisée en ce que** la structure plane est constituée de filaments ayant un diamètre compris entre 1 µm et 25 µm.

3. Cellule selon l'une des revendications 1 ou 2, **caractérisée en ce que** les filaments présentent un noyau constitué à partir d'un matériau non métallique et présentent une enveloppe constituée à partir d'un métal.

4. Cellule selon la revendication 3, **caractérisée en ce que** l'enveloppe en métal présente une épaisseur comprise entre 0,1 µm et 10 µm.

5. Cellule selon l'une des revendications précédentes, **caractérisée en ce que** la structure textile plane présente une surface BET spécifique comprise entre 0,1 m²/g et 20 m²/g.

6. Cellule selon l'une des revendications précédentes, **caractérisée en ce que** la structure textile plane présente une porosité comprise entre 20 % et 90 %.

7. Cellule selon l'une des revendications précédentes, **caractérisée en ce que** l'électrode négative présente une structure textile plane avec une densité moyenne de filaments comprise entre 0,25 mg/mm³ et 2,5 mg/mm³.

8. Cellule selon la revendication 7, **caractérisée en ce que** l'électrode négative contient un composé de carbone, lequel est capable, de manière réversible, de mettre en stock et de prélever du stock du lithium sous la forme d'ions, et/ou contient un métal et/ou un semi-métal, lequel est capable de former une phase intermétallique avec le lithium.

9. Cellule selon la revendication 7 ou 8, **caractérisée en ce que** la structure textile plane est constituée de filaments avec une enveloppe en cuivre, laquelle a été réalisée par une séparation à partir d'une suspension ou d'une solution contenant des métaux ou contenant des ions de métaux.

10. Cellule selon l'une des revendications précédentes, **caractérisée en ce que** l'électrode positive présente une structure textile plane avec une densité moyenne de filaments comprise entre 0,15 mg/mm³ et 1,5 mg/mm³.

11. Cellule selon la revendication 10, **caractérisée en ce que** l'électrode positive contient un composé métallique, lequel est capable, de manière réversible, de mettre en stock et de prélever du stock du lithium sous la forme d'ions.

12. Cellule selon la revendication 9 ou 10, **caractérisée en ce que** la structure textile plane est constituée de filaments avec une enveloppe en aluminium, laquelle a été réalisée par une séparation à partir de la phase gazeuse.
